# EUROPEAN PATENT SPECIFICATION

(11) **EP 3 312 590 B1**
(45) Date of publication and mention of the grant of the patent: **18.03.2020**
(21) Application number: 17197472.8
(22) Date of filing: 20.10.2017
(51) Int. Cl.: G01N 21/3554, G01N 21/3581, G01N 21/84

(54) **A NON-INVASIVE METHOD FOR MEASURING ABSOLUTE WATER CONTENT OF A LEAF**
NICHT-INVASIVES VERFAHREN ZUR BESTIMMUNG DES ABSOLUTEN WASSERGEHALTS EINES BLATTES
PROCÉDÉ NON INVASIF DE DÉTERMINATION DE LA TENEUR EN EAU ABSOLUE D'UNE FEUILLE

(30) Priority: 21.10.2016 IT 201600106179
(43) Date of publication of application: 25.04.2018
(73) Proprietor: Università di Pisa, 56126 Pisa (IT); CONSIGLIO PER LA RICERCA IN AGRICOLTURA E L'ANALISI DELL'ECONOMIA AGRARIA, 00198 Roma (IT)
(72) Inventor: Carelli, Giorgio, I-55100 LUCCA (IT); Toncelli, Alessandra, I-57127 LIVORNO (IT); Tredicucci, Alessandro, I-56123 PISA (IT); Baldacci, Lorenzo, I-50050 CAPRAIA E LIMITE (Firenze) (IT); Masini, Luca, I-56012 CALCINAIA (Pisa) (IT); Storchi, Paolo, I-52027 SAN GIOVANNI VALDARNO (Arezzo) (IT); Pagano, Mario, I-50141 FIRENZE (IT)
(74) Representative: Vanzini, Christian

(56) References cited:
- WO-A1-2016/121351
- US-A1- 2014 064 568
- ZHANG H ET AL: "Terahertz imaging for water content measurement", ELECTRICAL INSULATING MATERIALS, 2008. (ISEIM 2008). INTERNATIONAL SYMPOSIUM ON, IEEE, PISCATAWAY, NJ, USA, 7 September 2008 (2008-09-07), pages 87-90, XP031356151, ISBN: 978-4-88686-005-7
- N. BORN ET AL: "Monitoring Plant Drought Stress Response Using Terahertz Time-Domain Spectroscopy", PLANT PHYSIOLOGY, vol. 164, no. 4, 5 February 2014 (2014-02-05), pages 1571-1577, XP055379760, Rockville, Md, USA ISSN: 0032-0889, DOI: 10.1104/pp.113.233601
- RALF GENTE ET AL: "Monitoring leaf water content with THz and sub-THz waves", PLANT METHODS, BIOMED CENTRAL, LONDON, GB, vol. 11, no. 1, 6 March 2015 (2015-03-06), page 15, XP021218248, ISSN: 1746-4811, DOI: 10.1186/S13007-015-0057-7

## Description

The present invention refers to a method for measuring the water content of a leaf by means of terahertz waves, comprising
subjecting a leaf to terahertz radiation,
detecting the terahertz radiation transmitted through the leaf, and
determining the water content of the leaf from the detected transmitted terahertz radiation,
as well as an apparatus configured to implement such a method.

Currently, to determine the water content of a leaf, the gravimetric method (or double weighing) must be used. Operatively, an initial weighing of the specimen is carried out and the wet weight of the same is determined. Then the specimen is put into an oven and left undisturbed for 48 hours so that it may lose a large part of its moisture. A second weighing is carried out, the measurement is noted, and the specimen is put back into the oven for another 6 hours. The weighing is repeated, and the last data is compared with the previous record: if the weight variation occurring over the six hours is negligible (less than 0.5%), the stable weight is considered reached and therefore it is assumed that all the vapor, free water and saturated water have been removed from the specimen, which will be perfectly anhydrous. If, however, the weighing reveals a significant difference, the specimen is placed back in the oven for another 6 hours and the procedure is repeated until a constant weight value between the last two readings is reached. This traditional measurement method therefore requires destructive sampling and long wait times to obtain the definitive data.

A strong focus has recently been placed on terahertz spectroscopy techniques in the time domain, used as a non-invasive tool for measuring the water content of leaves [1-2] and the related quantities, such as water stress [3-4] and the dehydration kinetics [5].

In the state of the art, terahertz spectroscopy techniques have the following limitations:
1. To measure the amount of water in leaves in absolute terms, multiple-parameter physical models are used. Additional complex measurements are required for calibration.
2. Such additional measurements include the direct measurement of the refractive index of the wet part (water) of the leaf, of the gaseous part (air and vapor), and the solid part, i.e., the remaining compound as a whole. To measure the refractive index of the solid part, the technique used in the state of the art proposes to dehydrate the leaf and reduce it to a pellet. The refractive index of the pellet is measured by a terahertz elliptometer, a complex tool that is difficult to obtain commercially and therefore requires the presence of specialized personnel capable of assembling a terahertz elliptometer and hence a large economic investment.
3. In addition to spectroscopic measurements, the technique requires the volume of the leaf to be measured separately in its wet, gaseous and solid part. The volume of the gaseous part changes in weight according to the time of the day and environmental factors, such as the external humidity and temperature. The volume of the solid part varies mainly with the age of the leaf. In some cases, this may require further calibration of the instrument based on subpopulations of leaves subdivided by age and the time of day associated with the measurement, making the measurement complex to interpret.

A purpose of the present invention is to provide a non-invasive measurement method which is simpler to execute than the spectroscopic methods discussed above.

Another purpose of the present invention is to provide a noninvasive measurement method which may be implemented in the field with portable apparatuses.

For these purposes, the object of the invention is a method of the type indicated at the beginning, comprising the steps defined in claim 1.

Another object of the invention is an apparatus for measuring the water content of a leaf by means of terahertz waves, as defined in claim 4.

By determining the product between the absorbance and the projected area, the present invention allows the determination (non-invasive and precise) of the absolute amount of water within a leaf (note the variety of the plant to be investigated) without having to obtain additional spectroscopic information, generally complex to obtain, such as the refractive index and the absorption of the leaf.

In addition, the invention replaces the THz measurement in the time domain with an integrated measurement in time at a fixed frequency, resulting in reduced complexity of the electronic apparatus and management. This could allow for making relatively compact equipment that may be used in the field.

Preferred implementations of the invention are defined in the dependent claims.

Further features and advantages of the method and the apparatus according to the invention will become more apparent in the following detailed description of an embodiment of the invention, made with reference to the accompanying drawings, provided purely to be illustrative and non-limiting, wherein
figure 1 shows a schematic illustration of an embodiment of the apparatus according to the invention relating to: a) the constituent components, and b) the manner of use;
figure 2 is a simplified perspective view showing a part of the apparatus of figure 1;
figure 3 shows: a) and b) the apparatus of figure 2 in two different operating phases; c) the determination, on a leaf sample, of points of interest to be subjected to measurement; d) the determination of the projected area of the leaf sample; and
figure 4 shows graphs showing experimental data of a calibration carried out on the "Colorino" variety of *Vitis vinifera* L., sampling 58 leaves from 6 plants. The graph a) shows the product's trend between the area A and the absorbance τ as a function of the water mass M_{w} in the single leaf; the graph b) shows the trend of area A as a function of the water mass M_{w} in the single leaf; and c) shows the trend of absorbance τ as a function of the water mass of M_{w} in the single leaf.

One possible embodiment of the invention provides for the construction of a multiple measurement apparatus, possibly portable, and therefore also usable in the field, composed of a terahertz (THz) quantum cascade laser (QCL), a detector for measuring the power of the radiation and a lock-in amplifier to lower the background noise, a motorized support to hold the leaf to be analyzed in a perpendicular position with respect to the laser beam, a calibrated imaging system for the choice of spectroscopic measurement points and for measuring of the projected area of the leaf, a computerized management system with specific software and archive information. In particular, the use of a QCL allows, on one hand, to have a high spectral power density, which allows signals with a high signal-to-noise ratio to be captured, as well as real-time images, and, on the other, to achieve structural compactness, which in some configurations allows for a monolithic device that functions at room temperature.

For the purposes of the present invention, "terahertz radiation" or "terahertz waves" are defined as electromagnetic waves with frequencies in the range from 0.1 to 10 terahertz.

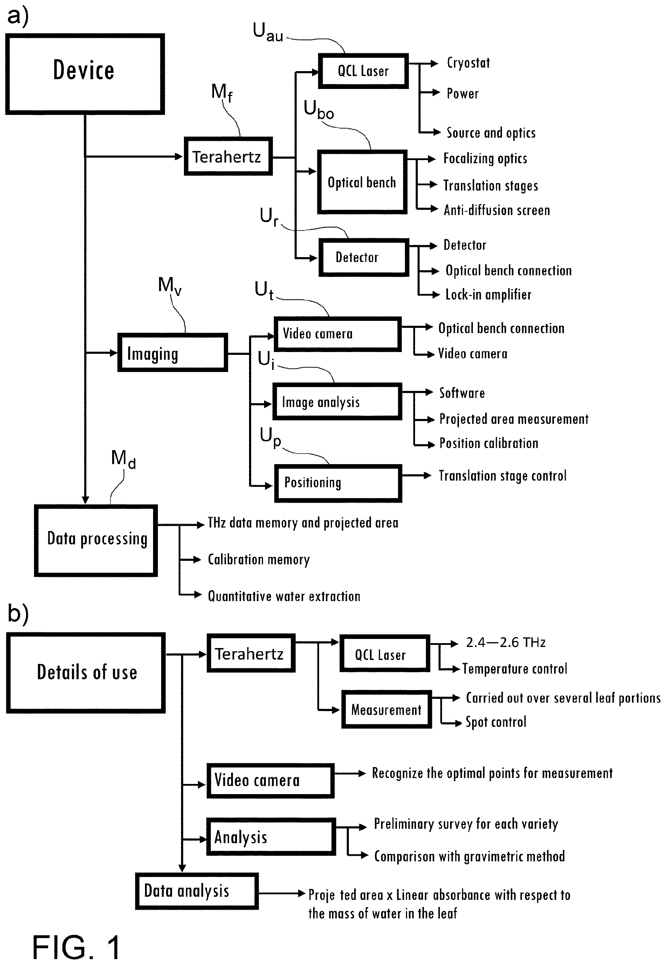

With reference to figure 1a, the device is characterized by a modular system composed of the following three parts:
1. THz module Mf, dedicated to the production of THz radiation and to the measurement of the absorbance of the leaf.
2. Imaging module Mᵥ, dedicated to the measurement and control of the leaf position with respect to the THz Mf module and to the measurement of the projected area of the same.
3. Data processing module Md, which serves to store the output data of the two preceding modules, and to process them based on the calibrations in the database.

The THz module Mf consists of three units: QCL unit U_{QCL}, optical bench unit U_{bo} and detector unit Uᵣ.

The QCL unit U_{QCL} comprises a laser, combined with collimating optical components, placed inside a closed loop cryostat connected to a vacuum pump. A power sub-unit generates the current pulses needed to produce laser radiation.

The optical bench unit U_{bo} is mounted on an aluminum plane fixed to the cryostat and is designed to control the optical path and the spatial distribution of the radiation from the cryostat to the detector unit Uᵣ. To accomplish this task, focalizing optics (for example a Picarin lens), a sample holder with translation stage to select the leaf portion to be analyzed, and an aluminum anti-diffusion screen with a hole aligned with the optical path of the laser (designed to avoid measurement distortions due to spurious signals) are provided.

The detector unit Uᵣ has the task of collecting, amplifying and filtering THz radiation transmitted by the leaf. It consists of a detector for the THz (for example a pyroelectric detector or a Golay cell or a microbolometer or nanowire detector) anchored to the optical bench unit U_{bo} to which a lock-in amplifier is connected.

The imaging module Mᵥ captures the images of the leaf both to define its coordinates with respect to the THz radiation beam and to measure its projected area. A video camera unit Uₜ of the imaging module Mᵥ, equipped with a sensor suitable for visible light, is anchored to the optical bench unit U_{bo}. An image analysis unit Uᵢ collects the data from the video camera and analyzes it through dedicated software. Additionally, an assisted positioning unit Uₚ may be integrated to automatically monitor the leaf position.

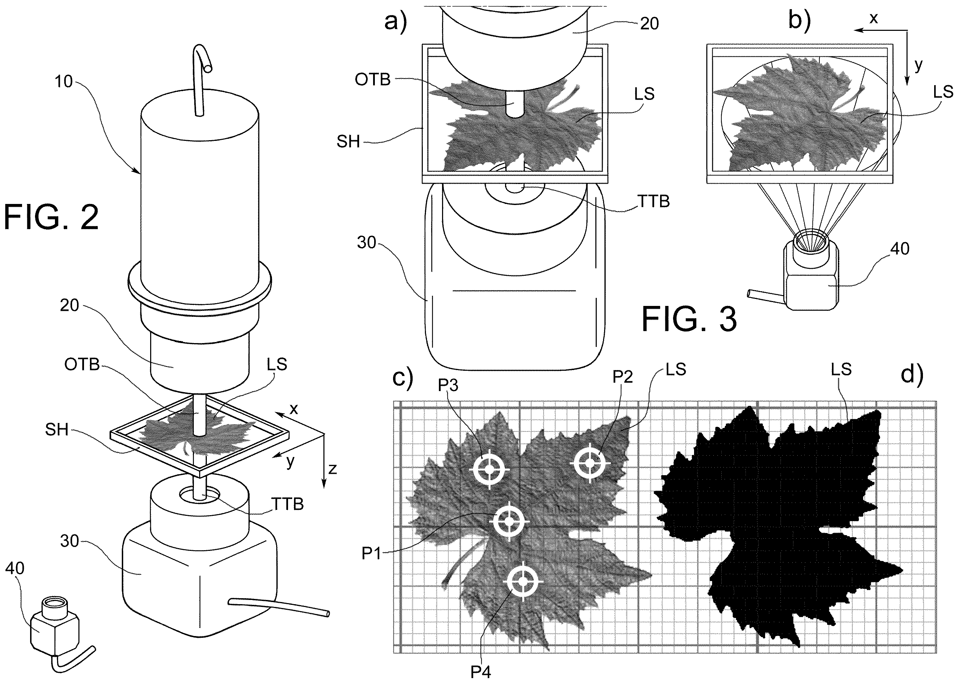

Figure 2 shows schematically some of the aforementioned components of the THz module and the imaging module. In particular, the cryostat is shown at 10, while 20 indicates a cold head of the cryostat, which also contains a THz source (QCL laser) and the dedicated optics. OTB indicates the THz beam emitted by the cryostat, and TTB the fraction of the beam that is transmitted through the leaf sample LS. SH indicates the sample holder supporting the leaf sample, which is motorized to move along the x and y axes perpendicular to the beam propagation z axis. On the other hand, the Thz detector that receives the transmitted fraction TTB of the THz beam is indicated at 30. The video camera of the imaging module is indicated at 40.

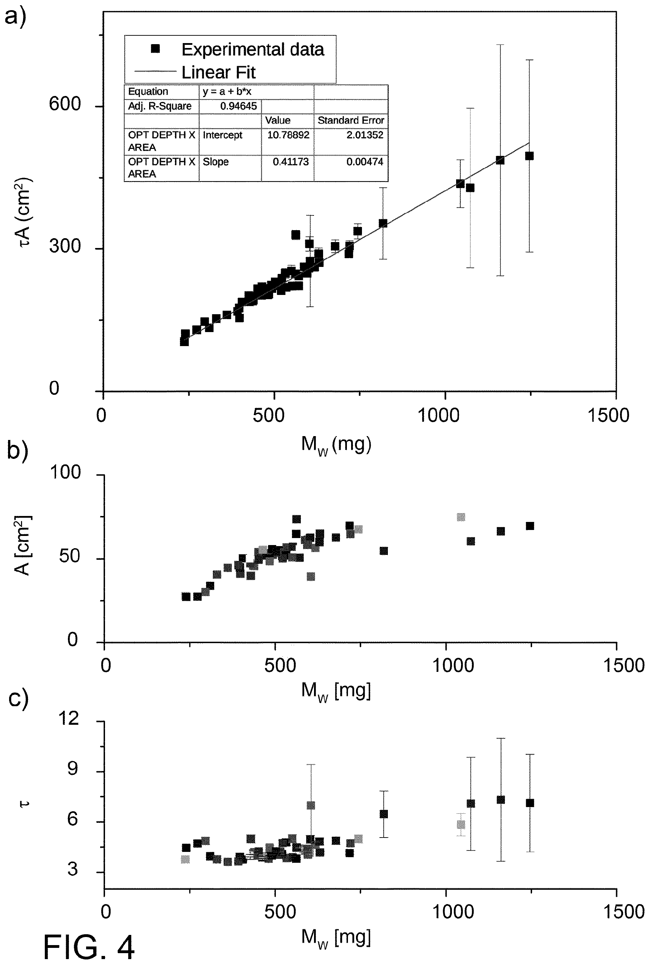

Lastly, the data processing module Md, which may be a dedicated computer, is tasked with capturing, storing and managing data from the other two modules, as a function of a database populated during the calibration phase. A survey memory unit Uₘᵣ is used to store leaf-related data collected while using the device. A calibration memory unit U_{mc} is used to store data on the measurements calibrated with the gravimetric method. A water quantification unit Uₐ compares the data stored in the memory storage unit Uₘᵣ, taking into account the calibration curve stored in the calibration memory unit U_{mc}, to calculate the mass of water present in the leaf (figure 4).

Figure 1b shows the operating details of the equipment described above. Such details may be divided into four sections: THz, Imaging, Calibration, Data Analysis.

The THz measurement has a preferential but non-exclusive frequency range between 2.4 and 2.6 THz in order to ensure the best homogeneity of the data despite possible fluctuations in the emission frequency. To reduce these fluctuations, the temperature of the heat exchanger inside the cryostat must be controlled. The transmittivity measurement, needed for a correct representation of the data, must be determined on multiple regions of the leaf (figures 3a and 3c).

For example, in *Vitis vinifera* (L.) ("Colorino" variety) 4 measurements were made on 4 regions with a diameter of 8 mm, subdivided as follows: one measurement (PI) near the first portion of the first order vein (i.e. from the petiolar sinus to the first bifurcation), one measurement (P2) near the first order vessel (in the distal part), two measurements (P3, P4) situated along the upper and lower lateral lobes. The aluminum anti-diffusion plate must have a hole as large as the size of the leaf region to be analyzed. This caution is necessary to make sure that the region illuminated by THz radiation is of the desired size. Through the imaging module Mᵥ, the four regions suitable for the THz measurement are identified, and the translation stages of the sample holder SH are moved near the same.

The Imaging function allows images to be captured with the video camera 40 (figure 3b), which, on the one hand, is used to recognize the points of the leaf intended for the THz measurement, and, on the other, are designed to permit the calculation of the projected area (black surface in figure 3d) of the leaf LS from images of the leaf. This may be done for example with image analysis techniques.

In practice, depending on the configuration of the apparatus, it may be provided that the transition between the THz function and the imaging function requires shifting the sample holder LS, exchanging the sensors 30 and 40, or simply activating one or other modules Mf and Mᵥ without further movement of parts.

Starting with the measurement of the THz radiation power transmitted through the leaf and detected by the THz detector 30, it is possible to determine the transmittivity of the leaf at the measurement points P1, ..., P4, and therefore (by averaging with respect to the measurement points N) the mean absorbance of the leaf, directly related to the linear water density in the same.

The calibration phase provides for the use of preliminary Thz surveys, carried out for a plant variety to be monitored and on a sufficiently representative population, to associate them with data obtained by the gravimetric method subsequently carried out on the same population.

It is thus possible to obtain a calibration curve wherein the product of the projection area A for the mean absorbance τ of the single leaf is directly proportional to the water mass M_{w} present in the same (figure 4a). Such proportionality ratio, within the same variety, is independent of the specific plant from which the leaf is obtained. It is important to note that the absorbance is not independent of the projected area.

The calibration curve may be stored as a data structure in a memory residing in the apparatus, or in a remote memory that may communicate with the processing module of the apparatus.

Once the calibration curve is defined, subsequent measurements made on the leaves of the same plant variety allow the value of the water content of such leaves to be extracted by comparing the product Aτ thereof, determined with the calibration curve.

The development of a portable QCL system, both as a prototype for research laboratories and to be housed on specifically designed agricultural machinery, could allow the water content of the leaves to be monitored without invasiveness and continuously over time.

In effect, the present invention sees in its development two macro areas of interest: basic research and technological transfer within the productive sector. In the first case, a QCL system may allow new inherent information to be obtained, for example, the correlation that exists between the density of the vascular system of the leaves and the hydration status of the same, with possible applicative effects in the assessment of sensitivity to water stress in different cultivars (e.g. *Vitis vinifera* L.) and the resulting varietal choices. Furthermore, it may be studied in detail how a different form of cultivation (and management of a green wall) results in a multidimensional balance of the water content in the plant. Such information could, for example, reveal the need to adopt different orientations of plantations subsidiarily to the study of new forms of cultivation.

Measurements with THz may be correlated in order to study in detail the polyhedric physiological functions of a plant, including a determination of the following parameters: stomatic density, net photosynthesis, transpiration, lymph flow speed, leaf color index, ampelometric characteristics, water potential of the leaf and of the ground, ground moisture. The advantage lies in the determination - fast, non-invasive and precise - of the absolute quantity of water inside a leaf, allowing an easy implementation of the most varied physiological hypotheses combined with the use of water resources.

Furthermore, the determination of the water content of specific anatomical portions of plants via THz-QCL may be correlated with the thermographic values that normally distinguish cultivated varieties. In effect, this technology may, by combining it with a precise thermographic investigation, allow heat dissipation in the cultivated species (whether tree or herbaceous) to be assessed according to the following parameters: form of cultivation, variety, condition of water stress (soil and plant), environmental conditions. This type of survey allows the most suitable genotypes for a particular pedo-climatic and productive scenario to be selected, along with the ever-increasing need to save water resources.

In the second case, however, mechanical devices equipped with QCL that may be used directly in the field could ensure a rapid and accurate measurement of the water status of the plants grown over the whole area, thereby allowing one to intervene in a rational and timely manner with irrigation. Moreover, in the specific case of species wherein it is necessary to monitor the progress of fruit ripening, as in the case of the grapes of *Vitis vinifera* L., the QCL system may be an extremely useful tool for determining the water content and thus give an indication of the stage of development of the technological maturation.

Furthermore, the use of QCL technology, in addition to being useful for monitoring the hydration status of fruit tree crops (e.g. fam. Actinidiaceae, Rosaceae, Moraceae, etc.), ornamental trees (e.g. fam. Aceraceae, Ulmaceae, Tigliaceae, etc.) or herbaceous (e.g. fam. Graminaceae, Solanaceae, Asteraceae, etc.), may also play a major role in the management of water resources within urban green areas. For example, the determination of the amount of water present in the species of leaves used to adorn "green walls" may be a valuable tool for selecting the most suitable species in order to ensure better thermal insulation in buildings that make use thereof. Together with the determination of the water content present in the mesophilic and the transpiration speed of the leaf, a model may be constructed that determines the minimum water supply necessary to keep the leaves in a proper state of turgidity within a green wall carried out in condition of hydroponics.

### Bibliographical references

[1] Gente, R., Koch, M.: Monitoring leaf water content with thz and sub-thz waves. Plant methods 11(1), 15 (2015)
[2] Jepsen, P.U., Cooke, D.G., Koch, M.:Terahertz spectroscopy and imaging: modern techniques and applications. Laser & Photonics Reviews 5(1), 124:166 (2011)
[3] Born, N., Behringer, D., Liepelt, S., Beyer, S., Schwerdtfeger, M., Ziegenhagen, B., Koch, M.: Monitoring plant drought stress response using terahertz time-domain spectroscopy. Plant physiology 164(4), 1571:1577 (2014)
[4] Jordens, C., Scheller, M., Breitenstein, B., Selmar, D., Koch, M.: Evaluation of leaf water status by means of permittivity at terahertz frequencies. Journal of biological physics 35(3), 255:264 (2009)
[5] Castro-Camus, E., Palomar, M., Covarrubias, A.: Leaf water dynamics of Arabidopsis thaliana monitored in-vivo using terahertz time-domain spectroscopy. Scientific reports 3 (2013)
[6] Zhang H., Mitobe K., Yoshimure N.: Terahertz imaging for water content measurement", Proc. ISEIM 2008, 87-90 (2008).

## Claims

1. A method for measuring a water content of a leaf by means of terahertz waves, comprising
subjecting a leaf (LS) to terahertz radiation,
detecting the terahertz radiation (TTB) transmitted through the leaf (LS) in a plurality of predetermined points (P1, P2, P3, P4) of the leaf (LS), and
determining a water content of the leaf (LS) from the detected transmitted terahertz radiation (TTB),
**characterized by** further comprising
determining a total projected area of the leaf (LS), wherein determining the total projected area (A) of the leaf (LS) comprises
- capturing visible spectrum images of the leaf (LS), and
- determining the total projected area of the leaf (LS) from said visible spectrum images,
wherein determining the water content of the leaf (LS) comprises
determining an absorbance of the leaf (LS) by:
- determining the absorbance in the plurality of predetermined points (P1, P2, P3, P4) of the leaf (LS) from the detected transmitted terahertz radiation transmitted (TTB) in these points (P1, P2, P3, P4), and
- calculating a mean absorbance of the leaf (LS) from values of the absorbance determined at the predetermined points (P1, P2, P3, P4) of the leaf (LS),
determining a product of the mean absorbance and the total projected area of the leaf (LS), and
determining an absolute water content of the leaf (LS) by means of comparison of said product with a calibration curve associating water content data with data of product of absorbance and projected area of leaves of the same variety.

2. A method according to claim 1, wherein the terahertz radiation is generated by a quantum cascade laser.

3. A method according to any of the preceding claims, wherein the calibration curve consists of a data structure stored in a memory.

4. An apparatus for measuring a water content of a leaf (LS) by means of terahertz waves, comprising
a terahertz radiation source (20),
a sample holder (SH) configured for holding a leaf (LS) to be subjected to terahertz radiation,
a terahertz radiation detector (30) configured for detecting the terahertz radiation (TTB) transmitted through the leaf (LS), and
a processing system (M_{d}) configured for determining a water content of the leaf from the detected transmitted terahertz radiation (TTB),
**characterized by** further comprising an imaging system (Mᵥ, 40) configured for capturing visible spectrum images of the leaf (LS),
wherein the processing system (M_{d}) is configured for
determining a total projected area of the leaf from said visible spectrum images, determining an absorbance of the leaf by:
- determining the absorbance in a plurality of predetermined points (P1, P2, P3, P4) of the leaf (LS) from the detected transmitted terahertz radiation (TTB) in these points, and
- calculating a mean absorbance of the leaf (LS) from values of the absorbance determined
at the predetermined points (P1, P2, P3, P4) of the leaf (LS),
determining a product of the mean absorbance and the total projected area of the leaf (LS), and
determining absolute water content of the leaf (LS) by means of comparison of said product with a calibration curve associating water content data with data of product of the absorbance and the projected area of leaves of the same variety.

5. An apparatus according to claim 4, wherein the terahertz radiation source (20) comprises a quantum cascade laser.

6. An apparatus according to claim 4 or 5, wherein the calibration curve consists of a data structure stored in a memory.

7. An apparatus according to any of claims 4 to 6, further comprising a moving system configured for translating the sample holder (SH).

## Patentansprüche

1. Verfahren zum Messen eines Wassergehalts eines Blatts mittels Terahertzwellen, mit Bestrahlen eines Blatts (LS) mit Terahertzstrahlung,
Detektieren der durch das Blatt (LS) übertragenen Terahertzstrahlung (TTB) an mehreren vorbestimmten Punkten (P1, P2, P3, P4) des Blatts (LS) und
Bestimmen eines Wassergehalts des Blatts (LS) anhand der detektierten übertragenen Terahertzstrahlung (TTB),
ferner **gekennzeichnet durch**
Bestimmen einer gesamten projizierten Fläche des Blatts (LS), wobei das Bestimmen der gesamten projizierten Fläche (A) des Blatts (LS)
- Erfassen von Bildern des Blatts (LS) im sichtbaren Spektrum und
- Bestimmen der gesamten projizierten Fläche des Blatts (LS) anhand der Bilder im sichtbaren Spektrum beinhaltet,
bei dem das Bestimmen des Wassergehalts des Blatts (LS)
Bestimmen eines Extinktionsvermögens des Blatts (LS) **durch**:
- Bestimmen des Extinktionsvermögens an den mehreren vorbestimmten Punkten (P1, P2, P3, P4) des Blatts (LS) anhand der an diesen Punkten (P1, P2, P3, P4) detektierten übertragenen Terahertzstrahlung und
- Berechnen eines mittleren Extinktionsvermögen des Blatts (LS) anhand von Werten des an den vorbestimmten Punkten (P1, P2, P3, P4) des Blatts (LS) bestimmten Extinktionsvermögens,
Bestimmen eines Produkts aus dem mittleren Extinktionsvermögen und der gesamten projizierten Fläche des Blatts (LS) und
Bestimmen eines absoluten Wassergehalts des Blatts (LS) mittels eines Vergleichs des Produkts mit einer Kalibrierungskurve, die Wassergehaltsdaten Daten eines Produkts aus einem Extinktionsvermögen und einer projizierten Fläche von Blättern derselben Art zuordnet, beinhaltet.

2. Verfahren nach Anspruch 1, bei dem die Terahertzstrahlung durch einen Quantenkaskadenlaser erzeugt wird.

3. Verfahren nach einem der vorhergehenden Ansprüche, bei dem die Kalibrierungskurve aus einer in einem Speicher gespeicherten Datenstruktur besteht.

4. Vorrichtung zum Messen eines Wassergehalts eines Blatts (LS) mittels Terahertzwellen, mit
einer Terrahertz-Strahlungswelle (20),
einem Sample-Halter (SH), der zum Halten eines Blatts (LS), das mit Terahertzstrahlen zu bestrahlen ist, ausgebildet ist,
einem Terahertzstrahlungsdetektor (30), der zum Detektieren der durch das Blatt (LS) übertragenen Terahertzstrahlung (TTB) ausgebildet ist, und
einem Verarbeitungssystem (M_{d}), das zum Bestimmen eines Wassergehalts des Blatts anhand der detektierten übertragenen Terahertzstrahlung (TTB) ausgebildet ist,
ferner **gekennzeichnet durch** ein Bildgebungssystem (Mᵥ, 40), das zum Erfassen von Bildern des Blatts (LS) im sichtbaren Spektrum ausgebildet ist,
bei dem das Verarbeitungssystem (M_{d}) ausgebildet ist zum
Bestimmen einer gesamten projizierten Fläche des Blatts (LS) anhand der Bilder im sichtbaren Spektrum,
Bestimmen eines Extinktionsvermögens des Blatts (LS) **durch**:
- Bestimmen des Extinktionsvermögens an den mehreren vorbestimmten Punkten (P1, P2, P3, P4) des Blatts (LS) anhand der an diesen Punkten (P1, P2, P3, P4) detektierten übertragenen Terahertzstrahlung und
- Berechnen eines mittleren Extinktionsvermögen des Blatts (LS) anhand von Werten des an den vorbestimmten Punkten (P1, P2, P3, P4) des Blatts (LS) bestimmten Extinktionsvermögens,
Bestimmen eines Produkts aus dem mittleren Extinktionsvermögen und der gesamten projizierten Fläche des Blatts (LS) und
Bestimmen eines absoluten Wassergehalts des Blatts (LS) mittels eines Vergleichs des Produkts mit einer Kalibrierungskurve, die Wassergehaltdaten Daten eines Produkts aus einem Extinktionsvermögen und einer projizierten Fläche von Blättern derselben Art zuordnet.

5. Vorrichtung nach Anspruch 4, bei der die Terahertzstrahlungsquelle (20) einen Quantenkaskadenlaser aufweist.

6. Vorrichtung nach Anspruch 4 oder 5, bei der die Kalibrierungskurve aus einer in einem Speicher gespeicherten Datenstruktur besteht.

7. Vorrichtung nach einem der Ansprüche 4 bis 6, ferner mit einem Bewegungssystem, das zum Verschieben des Sample-Halters (SH) ausgebildet ist.

## Revendications

1. Procédé pour mesurer une teneur en eau d'une feuille au moyen d'ondes térahertz, comprenant les étapes consistant à soumettre une feuille (LS) à un rayonnement térahertz,
détecter le rayonnement térahertz (TTB) transmis à travers la feuille (LS) au niveau d'une pluralité de points prédéterminés (P1, P2, P3, P4) de la feuille (LS), et
déterminer une teneur en eau de la feuille (LS) à partir du rayonnement térahertz (TTB) transmis et détecté,
**caractérisé en ce qu'**il comprend en outre
la détermination d'une aire projetée totale de la feuille (LS), où la détermination de l'aire (A) projetée totale de la feuille (LS) comprend
- la capture d'images du spectre visible de la feuille (LS), et
- la détermination de l'aire projetée totale de la feuille (LS) à partir desdites images de spectre visible,
où la détermination de la teneur en eau de la feuille (LS) comprend la détermination d'une absorbance de la feuille (LS) par :
- la détermination de l'absorbance au niveau de la pluralité des points prédéterminés (P1, P2, P3, P4) de la feuille (LS) à partir du rayonnement térahertz (TTB) transmis et détecté en ces points (P1, P2, P3, P4), et
- le calcul d'une absorbance moyenne de la feuille (LS) à partir de valeurs de l'absorbance déterminée au niveau des points prédéterminés (P1, P2, P3, P4) de la feuille (LS),
la détermination d'un produit de l'absorbance moyenne et de l'aire projetée totale de la feuille (LS), et
la détermination d'une teneur en eau absolue de la feuille (LS) au moyen d'une comparaison dudit produit avec une courbe d'étalonnage associant des données de teneur en eau à des données de produit d'absorbance et d'aire projetée de feuilles de la même variété.

2. Procédé selon la revendication 1, dans lequel le rayonnement térahertz est généré par un laser à cascade quantique.

3. Procédé selon l'une quelconque des revendications précédentes, dans lequel la courbe d'étalonnage est constituée d'une structure de données stockée dans une mémoire.

4. Appareil pour mesurer une teneur en eau d'une feuille (LS) au moyen d'ondes térahertz, comprenant
une source de rayonnement térahertz (20),
un porte-échantillon (SH) configuré pour porter une feuille (LS) devant être soumise à un rayonnement térahertz,
un détecteur de rayonnement térahertz (30) configuré pour détecter le rayonnement térahertz (TTB) transmis à travers la feuille (LS), et
un système de traitement (M_{d}) configuré pour déterminer une teneur en eau de la feuille à partir du rayonnement térahertz (TTB) transmis et détecté,
**caractérisé en ce qu'**il comprend en outre un système d'imagerie (Mᵥ, 40) configuré pour capturer des images de spectre visible de la feuille (LS), où le système de traitement (M_{d}) est configuré pour déterminer une aire projetée totale de la feuille à partir desdites images de spectre visible,
déterminer une absorbance de la feuille par :
- la détermination de l'absorbance en une pluralité de points prédéterminés (P1, P2, P3, P4) de la feuille (LS) à partir du rayonnement térahertz (TTB) transmis et détecté en ces points, et
- le calcul d'une absorbance moyenne de la feuille (LS) à partir de valeurs de l'absorbance déterminée au niveau des points prédéterminés (P1, P2, P3, P4) de la feuille (LS),
déterminer un produit de l'absorbance moyenne et de l'aire projetée totale de la feuille (LS), et
déterminer une teneur en eau absolue de la feuille (LS) au moyen d'une comparaison dudit produit avec une courbe d'étalonnage associant des données de teneur en eau à des données du produit de l'absorbance et de l'aire projetée de feuilles de la même variété.

5. Appareil selon la revendication 4, dans lequel la source de rayonnement térahertz (20) comprend un laser à cascade quantique.

6. Appareil selon la revendication 4 ou 5, dans lequel la courbe d'étalonnage est constituée d'une structure de données stockée dans une mémoire.

7. Appareil selon l'une quelconque des revendications 4 à 6, comprenant en outre un système de déplacement configuré pour translater le porte-échantillon (SH).
